# EUROPEAN PATENT APPLICATION

(11) **EP 3 705 827 A1**
(43) Date of publication of application: **09.09.2020**
(21) Application number: 19216146.1
(22) Date of filing: 13.12.2019
(51) Int. Cl.: F28D 7/02, F02C 7/14

(54) **CYLLINDRICAL HELICAL CORE GEOMETRY FOR HEAT EXCHANGER**

(30) Priority: 08.03.2019 US 201962815847 P
(71) Applicant: Hamilton Sundstrand Corporation, Charlotte, NC 28217-4578 (US)
(72) Inventor: RUIZ, Gabriel, Granby, CT 06035 (US); BECENE, Ahmet T., West Simsbury, CT 06092 (US); FENG, Feng, South Windsor, CT 06076 (US); MAYNARD, Michael, Somers, CT 06071 (US); DOE, Michael, Southwick, MA 01077 (US); HU, Michele, MAnchaster, CT 06042 (US); EPHRAIM, Joseph, South Windsor, CT 06074 (US)
(74) Representative: Dehns

(57) **Abstract**

A heat exchanger (10) includes a first fluid manifold extending along a first fluid axis from a first fluid inlet to a first fluid outlet. The first fluid manifold includes first fluid inlet and outlet headers (16, 18), and a helical core section (20). The inlet header is disposed to branch the first fluid inlet into a plurality of first fluid branches, and the outlet header is disposed to combine the plurality of first fluid branches into the first fluid outlet. The core section fluidly connects the inlet header to the outlet header via a plurality of helical tubes (30), such that each helical tube corresponds to one of the plurality of first fluid branches.

## Description

### BACKGROUND

The present disclosure is related generally to heat exchangers and more particularly to heat exchanger core designs.

Heat exchangers can provide a compact, low-weight, and highly effective means of exchanging heat from a hot fluid to a cold fluid. Heat exchangers that operate at elevated temperatures, such as those used in modern aircraft engines, often have short service lifetimes due to thermal stresses, which can cause expansion and cracking of the fluid conduits. Thermal stresses can be caused by mismatched temperature distribution, component stiffness, geometry discontinuity, and material properties (e.g., thermal expansion coefficients and modulus), with regions of highest thermal stress generally located at the interface of the heat exchanger inlet/outlet and core.

A need exists for heat exchangers with increased heat transfer, reduced pressure loss and vibration excitation, and improved performance under thermal stresses.

### SUMMARY

In one aspect, the present disclosure is directed toward a heat exchanger that includes a tubular inlet, a tubular outlet, and a core. The core fluidically connects the tubular inlet to the tubular outlet via a plurality of tubes. Each of the tubes has a helical shape and is circumferentially displaced from each of the others of the plurality of tubes.

In another aspect, the present disclosure is directed toward a heat exchanger that includes a first fluid manifold extending along a first fluid axis from a first fluid inlet to a first fluid outlet. The first fluid manifold includes first fluid inlet and outlet headers, and a helical core section. The inlet header is disposed to branch the first fluid inlet into a plurality of first fluid branches, and the outlet header is disposed to combine the plurality of first fluid branches into the first fluid outlet. The helical core section fluidly connects the inlet header to the outlet header via a plurality of helical tubes, such that each helical tube corresponds to one of the plurality of first fluid branches.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is schematized side view of a heat exchanger with a helical core.
FIG. 2 is an exaggerated perspective side view of the heat exchanger of FIG. 1, in a compressed state.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

A heat exchanger with a rotationally symmetric helical core is presented herein. This helical core is made up of a plurality of structurally independent, circumferentially distributed and helical tubes. These tubes can be distributed in a cylindrically distributed spring arrangement. The helical geometry of the core increases heat exchanger functional length and surface area as a function of the total axial length of the core, and provides structural compliance that allows the core to serve as a spring to relieve thermal and other stresses from the heat exchanger and adjacent (connecting) flow elements.

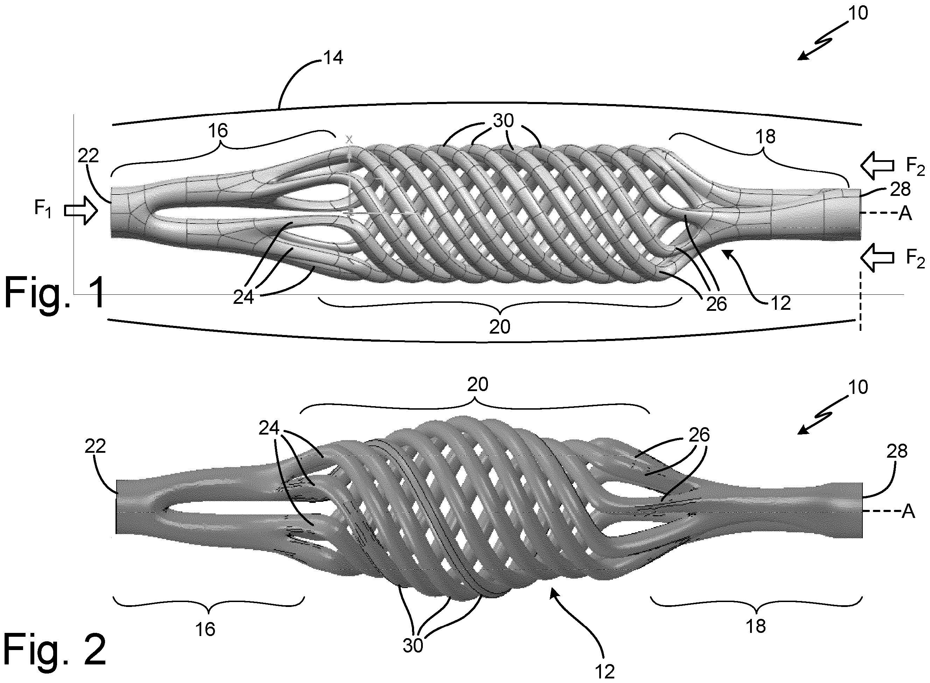

FIG. 1 is a schematized side view of heat exchanger 10, which includes first fluid manifold 12 and second fluid guide 14. First fluid manifold 12 includes inlet header 16, outlet header 18, and core section 20. Inlet header 16 forks from inlet passage 22 into a plurality of inlet header branches 24, and outlet header 18 recombines outlet header branches 26 into outlet passage 28. Core 20 is formed of a plurality of structurally independent helical tubes 30 that each extend from a separate inlet header branch 24 to a separate outlet header branch 26.

During operation of heat exchanger 10, hot fluid flow F1 is provided to inlet header 16, flows through core 20, and exits through outlet header 18. Thermal energy is transferred from hot fluid flow F1 to cooling fluid flow F2 as hot fluid flow F1 passes through core 20. It will be understood by one of ordinary skill in the art that the disclosed independent cold flow structure can be tailored for use with a wide variety of core geometries and is not limited to the embodiments shown. Furthermore, although the present disclosure refers to some flow as "cold" and other as "hot," the present geometry can more generally be applied to any two fluid flows in a heat exchange relationship, e.g. wherein F1 and F2 are exchanged i.e. as cold and hot flows, respectively.

As illustrated in FIG. 1, heat exchanger 10 is oriented substantially symmetrically along a fluid axis A, which connects extends from inlet passage 22 to outlet passage 28. In this embodiment, axis A is a straight line defining a primary flow direction of hot fluid flow F1 through first fluid manifold 12. In variations on the depicted embodiment, however, heat exchanger 10 can extend along a contoured (non-straight) axis, e.g. due to space constraints.

Headers 16, 18 distribute and receive fluid, respectively, substantially evenly across core 20. Specifically, inlet header 16 splits into inlet header branches 24, and outlet header 18 recombines from header branches 26. In the illustrated embodiment, header 16 is a successively fractally branching manifold with multiple stages of branches, each narrowing in cross-sectional flow area with respect to the previous stage of less numerous branches, finally terminating in the full count of outlet header branches 22 as the narrowest and most axially distant from inlet passage 22. More specifically, the present figures illustrate each stage of header 16 branching rotationally symmetrically about axis A into an even number of tubes evenly circumferentially distributed across a common plane transverse to axis A. More generally, however, header 16 can be of any shape capable of distributing fluid from a single source at inlet passage 22 across the multitude of separate helical tubes 30 of core 20. The illustrated embodiment, however, advantageously reduces pressure drop and provides additional mechanical compliance along axis A, within header 16.

As depicted in FIG. 1, header 18 substantially mirrors header 16, across core 20. In at least some embodiments, headers 16, 18 and core 20 are all formed monolithically. More generally, all components of heat exchanger first fluid manifold 12 can be formed partially or entirely by additive manufacturing. For metal components (e.g., Inconel, aluminum, titanium, etc.) exemplary additive manufacturing processes include but are not limited to powder bed fusion techniques such as direct metal laser sintering (DMLS), laser net shape manufacturing (LNSM), electron beam manufacturing (EBM). For polymer or plastic components, stereolithography (SLA) can be used. Additive manufacturing is particularly useful in obtaining unique geometries (e.g., varied core tube radii, arcuate core tubes, branched inlet and outlet headers) and for reducing the need for welds or other attachments (e.g., between headers 16, 18 and core 20). However, other suitable manufacturing process can be used. For example, header and core elements can in some embodiments be fabricated separately and joined via later manufacturing steps.

Second fluid guide 14 is illustrated schematically in FIGs. 1. Second fluid guide 14 can be included in some embodiments to constrain cooling fluid flow F2. Second fluid guide 14 is illustrated as a baffle surrounding mechanically unconnected to first fluid manifold 12. In other embodiments, second fluid guide 14 can have additional sub-layers or separations to further channel cooling fluid flow F2 through and across first fluid manifold 12. In still other embodiments, by contrast, second fluid guide 14 can be omitted altogether, and first fluid manifold 12 directly exposed to an unconstrained environment of cooling fluid flow F2. Second fluid guide 14 need not closely match the geometry of first fluid manifold 12, but can in some embodiments parallel at least some aspects of the geometry of first fluid manifold, e.g. to more closely capture core section 20 as a whole. In the illustrated embodiment, second fluid guide 14 channels cooling fluid flow F2 in a direction substantially antiparallel (i.e. parallel to but opposite) hot fluid flow F1. In other embodiments, second fluid guide 14 can instead direct cooling fluid flow F2 in a direction transverse to F1, e.g. in a cross-flow direction.

The majority of heat transfer enabled by heat exchanger 10 is accomplished within core section 20. Core section is formed by a plurality of separate, structurally independent helical tubes 30. Each helical tube 30 has a helical or spring-like geometry, extending axially and turning in common about fluid axis A. Helical tubes 30 are distributed circumferentially about axis A, such that each helical tube 30 is substantially identical to all other tubes 30, but shifted circumferentially relative to adjacent tubes. All tubes 30 are depicted as cross-sectionally distributed in a circular array across a plane orthogonal to fluid axis A. More generally, tubes 30 can be distributed in any array with rotational symmetry about fluid axis A, e.g. in elliptical or cloverleaf patterns. Circular symmetry in the distribution of tubes 30 permits all tubes 30 to have identical geometry, with correspondingly identical and therefore uniform fluid flow and heat transfer characteristics. Asymmetric arrangements of tubes 30, however, may be advantageous in tight space constraints, or where cooling fluid flow F2 is non-uniform. The spacing between adjacent helical tubes 30 is primarily circumferential, which provides a substantially uniform gap spacing between all adjacent tubes 30, so as to promote even airflow F2 therebetween. All helical tubes 30 can have a substantially identical and uniform inner diameter with a circular cross-section, resulting in equal cross-sectional areas. In the illustrated embodiment, the spacing between adjacent helical tubes 30 is greater than this inner diameter. In general, the rotational symmetry of helical tubes 30 within core 20 permits flow paths within headers 16, 18 to be substantially equal in length, for greater uniformity in the distribution of fluid flow F1 across tubes 30 relative to geometries with no such symmetry, or other symmetry types.

The helical shape of tubes 30 of core 20 serves several functions. First, helical tubes 30 have no sharp corners or interfaces (e.g. with headers 16, 18), and consequently reduce unnecessary pressure losses. Second, helical tubes 30 are compliant along axis A, acting as a spring capable of deforming to accommodation expansion or axial translation of adjacent components. In particular, helical tubes 30 can be capable of compliantly deforming along axis A so as to accommodate thermal growth of headers 16, 18, and/or translation of headers 16, 18 due to thermal growth of adjacent (upstream or downstream) components. This mechanical compliance provided by core 20 allows heat exchanger to better distribute and weather thermal and other mechanical stresses. FIG. 2 is an exaggerated (not to scale) perspective side view of heat exchanger 10 illustrating a compressed state of first fluid manifold 12. FIG. 2 illustrates the performance of core section 20 under such compression.

In at least some embodiments, helical core 20 is significantly less compliant laterally, i.e. in dimensions transverse to fluid axis A. This increased lateral stiffness provides first fluid manifold 12 with resonant frequencies of oscillation transverse to the first fluid flow that are greater than the range of operating frequencies of a surrounding engine or other components for at least its three highest amplitude natural frequencies, for example, so as to avoid excitation within the expected environment of heat exchanger 10. The generally circular cross-section of each tube 30 contributes to this increased lateral stiffness. The helical geometry of tubes 30 also provides greater fluid flow length within each tube 30, and correspondingly greater surface area exposed to cooling fluid flow F2. The overall passage length of each tube 30 can, for example, be double the axial length of core 30, or more. Helical tubes 30 can introduce additional turbulence to fluid flows F1, F2, for additional heat transfer.

In view of the above, in comparison to conventional straight-line connected channels, core 20 provides heat exchanger 10 with improved axial compliance to handle thermal stresses, increased lateral stiffness to avoid potentially harmful resonance conditions, and increased surface area exposed to cooling fluid flow F2 for greater heat exchange, all with only modest pressure losses from inlet passage 22 to outlet passage 28. Furthermore, the geometry of core 20 is symmetrical along two axes (axial and radial), and can consequently improve the uniformity of stress distribution across first fluid manifold 12.

### Discussion of Possible Embodiments

The following are non-exclusive descriptions of possible embodiments of the present invention.

A heat exchanger comprising: a tubular inlet; a tubular outlet; and a core fluidically connecting the tubular inlet to the tubular outlet via a plurality of tubes each having a helical shape and circumferentially displaced from each of the others of the plurality of tubes.

A heat exchanger comprising: a fluid manifold extending along a first fluid axis from a first fluid inlet to a first fluid outlet, the first fluid manifold comprising: an inlet header disposed to fork the first fluid inlet into a plurality of first fluid branches distributed circumferentially about the first fluid axis; an outlet header disposed to combine the plurality of first fluid branches into the first fluid outlet; and a helical core section fluidly connecting the inlet header to the outlet header via a plurality of cylindrically arranged helical tubes, each helical tube corresponding to one of the plurality of first fluid branches.

The heat exchanger of the preceding paragraph can optionally include, additionally and/or alternatively, any one or more of the following features, configurations and/or additional components:
A further embodiment of the foregoing heat exchanger, wherein each of the plurality of helical tubes is structurally independent from all others of the plurality of helical tubes, such that the plurality of helical tubes are mechanically connected to each other only at the inlet header and the outlet header.

A further embodiment of the foregoing heat exchanger, wherein each of the plurality of helical tubes extends axially along and circumferentially about the first fluid axis.

A further embodiment of the foregoing heat exchanger, wherein the first fluid axis extends linearly from the first fluid inlet passage to the first fluid outlet passage, and wherein the first fluid inlet and the first fluid outlet are themselves oriented along the first fluid axis.

A further embodiment of the foregoing heat exchanger, wherein each of the plurality of helical tubes is mechanically separated from adjacent of the plurality of helical tubes by a circumferential and axial gap.

A further embodiment of the foregoing heat exchanger, wherein a structural rigidity of the first fluid manifold along the first fluid axis is less than along any radial dimension with respect to the first fluid axis.

A further embodiment of the foregoing heat exchanger, wherein the first fluid manifold is situated in an environment with a known range of operating frequencies, and wherein the first fluid manifold has at least a highest amplitude natural resonance frequency of oscillation transverse to the first fluid axis that is greater than the known range of operating frequencies.

A further embodiment of the foregoing heat exchanger, wherein each of plurality of helical tubes has a total passage length at least double its extent along the first fluid axis.

A further embodiment of the foregoing heat exchanger, wherein the helical core section forms a spring shape extending between the inlet header and the outlet header, wherein the spring shape is principally compliant along the first fluid axis.

A further embodiment of the foregoing heat exchanger, wherein the helical core section is capable of compliantly deforming to accommodate axial growth of the inlet header and outlet header.

A further embodiment of the foregoing heat exchanger, further comprising a second fluid flow structure disposed to direct a second fluid to impinge on the first fluid manifold, wherein the second fluid flow structure is configured to direct the second fluid generally along a direction from the first fluid outlet to the first fluid inlet.

A further embodiment of the foregoing heat exchanger, wherein the inlet header branches the first fluid inlet passage into a first number N of first fluid branches, and wherein the plurality of helical tubes comprises N helical tubes even distributed circumferentially to form a cylindrical arrangement with a circumferential angular separation of 360°/N.

A further embodiment of the foregoing heat exchanger, wherein the entirety of the first fluid manifold is formed monolithically as a single structure.

A further embodiment of the foregoing heat exchanger, wherein all of the plurality of helical tubes have identical flow area.

A further embodiment of the foregoing heat exchanger, wherein all of the plurality of helical tubes have a circular cross-section with a common diameter.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heat exchanger (10) comprising:
a tubular inlet;
a tubular outlet; and
a core (20) fluidically connecting the tubular inlet to the tubular outlet via a plurality of tubes (30) each having a helical shape and circumferentially displaced from each of the others of the plurality of tubes.

2. A heat exchanger comprising:
a fluid manifold extending along a first fluid axis from a first fluid inlet to a first fluid outlet, the first fluid manifold comprising:
an inlet header (16) disposed to fork the first fluid inlet into a plurality of first fluid branches distributed circumferentially about the first fluid axis;
an outlet header (18) disposed to combine the plurality of first fluid branches into the first fluid outlet; and
a helical core section (20) fluidly connecting the inlet header to the outlet header via a plurality of cylindrically arranged helical tubes, each helical tube corresponding to one of the plurality of first fluid branches.

3. The heat exchanger of claim 2, wherein each of the plurality of helical tubes is structurally independent from all others of the plurality of helical tubes, such that the plurality of helical tubes are mechanically connected to each other only at the inlet header and the outlet header.

4. The heat exchanger of claim 2, wherein each of the plurality of helical tubes extends axially along and circumferentially about the first fluid axis.

5. The heat exchanger of claim 2, wherein the first fluid axis extends linearly from the first fluid inlet passage to the first fluid outlet passage, and wherein the first fluid inlet and the first fluid outlet are themselves oriented along the first fluid axis.

6. The heat exchanger of claim 2, wherein each of the plurality of helical tubes is mechanically separated from adjacent of the plurality of helical tubes by a circumferential and axial gap.

7. The heat exchanger of claim 2, wherein a structural rigidity of the first fluid manifold along the first fluid axis is less than along any radial dimension with respect to the first fluid axis.

8. The heat exchanger of claim 7, wherein the first fluid manifold is situated in an environment with a known range of operating frequencies, and wherein the first fluid manifold has at least a highest amplitude natural resonance frequency of oscillation transverse to the first fluid axis that is greater than the known range of operating frequencies.

9. The heat exchanger of claim 2, wherein each of plurality of helical tubes has a total passage length at least double its extent along the first fluid axis.

10. The heat exchanger of claim 2, wherein the helical core section forms a spring shape extending between the inlet header and the outlet header, wherein the spring shape is principally compliant along the first fluid axis.

11. The heat exchanger of claim 2, wherein the helical core section is capable of compliantly deforming to accommodate axial growth of the inlet header and outlet header.

12. The heat exchanger of claim 2, further comprising a second fluid flow structure disposed to direct a second fluid to impinge on the first fluid manifold, wherein the second fluid flow structure is configured to direct the second fluid generally along a direction from the first fluid outlet to the first fluid inlet.

13. The heat exchanger of claim 2, wherein the inlet header branches the first fluid inlet passage into a first number N of first fluid branches, and wherein the plurality of helical tubes comprises N helical tubes even distributed circumferentially to form a cylindrical arrangement with a circumferential angular separation of 360°/N.

14. The heat exchanger of claim 2, wherein the entirety of the first fluid manifold is formed monolithically as a single structure.

15. The heat exchanger of claim 2, wherein all of the plurality of helical tubes have identical flow area, and optionally
wherein all of the plurality of helical tubes have a circular cross-section with a common diameter.
